# EUROPEAN PATENT APPLICATION

(11) **EP 1 607 955 A2**
(43) Date of publication of application: **21.12.2005**
(21) Application number: 05104368.5
(22) Date of filing: 23.05.2005
(51) Int. Cl.: G11B 15/295

(54) **Cassette tape deck**

(30) Priority: 18.06.2004 KR 2004045304; 10.08.2004 KR 2004062693
(71) Applicant: SAMSUNG ELECTRONICS CO., LTD., Suwon-si, Gyeonggi-do 442-742 (KR)
(72) Inventor: Kim, Jun-young, Yeongtong-gu Suwon-si Gyeonggi-do (KR); Oh, Jeong-hyeob, Dongan-gu Anyang-si Gyeonggi-do (KR); Sim, Jae-hoon, Yeongtong-gu Suwon-si Gyeonggi-do (KR); Park, Byeng-bae, Gyeonggi-do (KR); Lee, Seung-woo, Yeongtong-gu Suwon-si Gyeonggi-do (KR); Choi, Hyeong-seok, Yeongtong-dong/-gu Suwon-si Gyeonggi-do (KR)
(74) Representative: Geary, Stuart Lloyd

(57) **Abstract**

A magnetic recording and reproducing apparatus is provided which comprises a deck (40) mounted with a drum motor (36) and a capstan shaft (43a), a main sliding member (53) slidably installed on the deck and being driven by a driving force of the drum motor, a pivot lever (61) rotatably installed on the deck and supporting a pinch roller (62) for guiding a tape to be in contact with the capstan shaft, a review arm (63) rotatably installed on the deck and being connected to the pivot lever by means of an elastic member (65), and a compressing lever (55) for connecting the review arm (63) and the sliding member (53). The compressing lever (55) is driven by a driving force from the sliding member (53), and compresses the review arm (63) in a direction such that the elastic member (65) is stretched. The pivot lever (61) is then rotated by the stretched elastic member (65) and adheres the pinch roller (62) closely to the capstan shaft.

## Description

The present invention relates to a cassette tape deck comprising a pinch roller movable between retracted and operative positions, a review pole movable between retracted and operative positions and means for moving the pinch roller and the review pole between their retracted and operative positions.

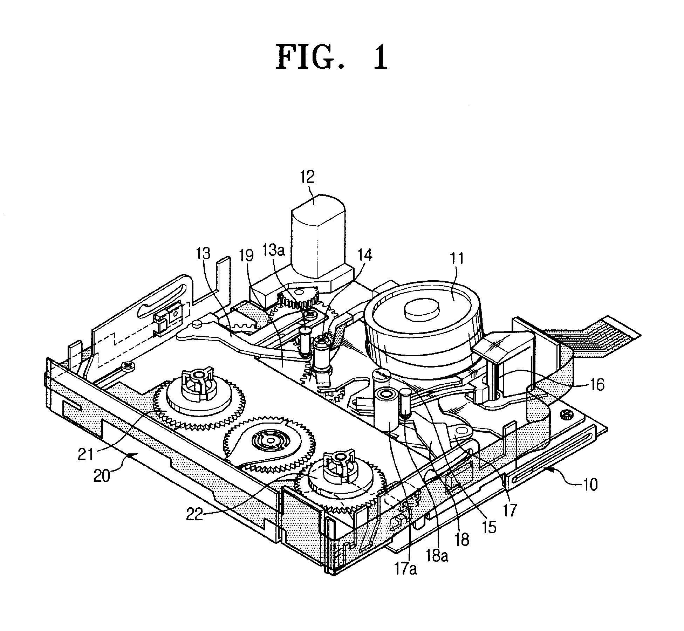

Figure 1 shows a magnetic recording and reproducing apparatus including a deck 10. The deck 10 supports a head drum 11. The head drum 11 scans a running magnetic tape (not shown) and records or reads information to or from the magnetic tape. The magnetic recording and reproducing apparatus also includes a sub-deck 20 which is slidably installed on the deck 10. A cassette tape (not shown) may be seated upon reel tables 21, 22. The deck 10 includes a guide means for pulling the magnetic tape out of a feed reel (or supply reel) in the cassette tape and for guiding the tape along a tape path, via the head drum 11.

Typically, the guide means includes a tension pole 13a, a pair of pole base assemblies 14, 15, a capstan shaft 16, a pinch roller 17a and a review pole 18a.

The tension pole 13a is disposed on a tension arm 13 rotatably connected to the sub-deck 20. In play mode, the tension pole 13a can be moved to control the tension in the tape. In stop mode, the tension arm 13 and the tension pole 13a move by means of a cam gear 19. The cam gear 19 is rotated by a drum motor 12. The position of the tension pole 13a may be varied to control the tension in the tape.

The pole base assemblies 14, 15 engage the cam gear 19. When a cassette tape is loaded, the pole base assemblies 14, 15 draw out a length of tape from the cassette tape. When the cassette tape is unloaded, the pole base assemblies 14, 15 return to their original positions.

The capstan shaft 16 is driven by a capstan motor (not shown) disposed on the deck 10. The tape runs between the pinch roller 17a and the capstan shaft 16 when the capstan shaft 16 rotates. The capstan motor (not shown) drives reel tables 21, 22 which in turn drive respective tape reels of the cassette tape.

The pinch roller 17a is disposed on a pinch arm 17 which is rotatably connected to the deck 10. The pinch arm 17 rotates in the clockwise direction during a tape loading process. Thus, during the tape loading process, the pinch roller 17a moves towards the capstan shaft 16. When the tape runs, the pinch arm 17 rotates a further distance in the clockwise direction, thereby pressing the tape onto the capstan shaft 16. The pinch arm 17 moves towards the capstan shaft 16 when the sub-deck 20 is loaded and returns to its original position when the sub-deck 20 is unloaded. The retuning motion may be provided with the aid of the restoring force of a spring (not shown).

The deck 10 can further include a main sliding member (not shown) for controlling the motion of the pinch arm 17 and a compressing member (not shown) connected to the main sliding member. The main sliding member engages the cam gear 19. As the main sliding member slides back and forth, the compressing member (not shown) and the pinch arm 17 move together. The constitution of the main sliding member and compressing member is well-known to those skilled in the art. Accordingly, a detailed description thereof is omitted for conciseness.

The review pole 18a is disposed on a review arm 18 that is rotatably connected to the deck 10. The review pole 18a guides the tape around a take-up reel of the tape cassette. Similar to the pinch arm 17, the review arm 18 is typically connected to the sub-deck 20 or the main sliding member (not shown).

Conventional magnetic recording and reproducing apparatus having the above constitution have several problems. For example, they require a large number of components and often have a highly complicated structure. They may also have a large weight and a high manufacturing cost. To overcome these problems, the structure of the magnetic recording and reproducing apparatus may be simplified by removing unnecessary components. For instance, a magnetic recording and reproducing apparatus can have only one deck, i.e. no sub-deck.

Accordingly, a need exists for a system and method of providing a magnetic recording and reproducing apparatus having a simple structure and fewer components, yet being able to control the tension in the tape and movement of the pinch roller.

A cassette tape deck, according to the preset invention, is characterised in that the pinch roller and the review pole are resiliently coupled for movement together between their retracted positions and an intermediate position, whereat the pinch roller is at its operative position, and independent movement of the review pole beyond said intermediate position.

Preferably, the pinch roller is mounted distally on a first arm, the review pole is mounted distally on a second arm, the first and second arms are connected by a pivot at a proximal position and connected by spring means at a distal position.

Preferably, the deck includes a cam and a lever, wherein one end of the lever comprises a cam follower, arranged to follow said cam and the other end of the lever is connected to the distal end of the second arm for moving the second arm so as to move the review pole between its retracted and operative position.

Additional preferred and optional features are set forth in claims 4 to 20 appended hereto.

An embodiment of the present invention will now be described, by way of example, with reference to Figures 2 to 7 of the accompanying drawings, in which:
Figure 1 shows a conventional magnetic recording and reproducing apparatus;
Figure 2 shows perspective view of a magnetic recording and reproducing apparatus according to the present invention;
Figure 3 shows a plan view of a magnetic recording and reproducing apparatus according to the present invention;
Figure 4 shows a deck, a main sliding member, a compressing lever, a review arm, an elastic member, and a pivot lever according to the present invention;
Figures 5A to 6B show an operational example of a magnetic recording and reproducing apparatus according to the present invention; and
Figure 7 is a flowchart of a method of driving a magnetic recording and reproducing apparatus according to the present invention.

Descriptions of functions and constructions, well known to those skilled in the art, will be omitted for clarity and conciseness.

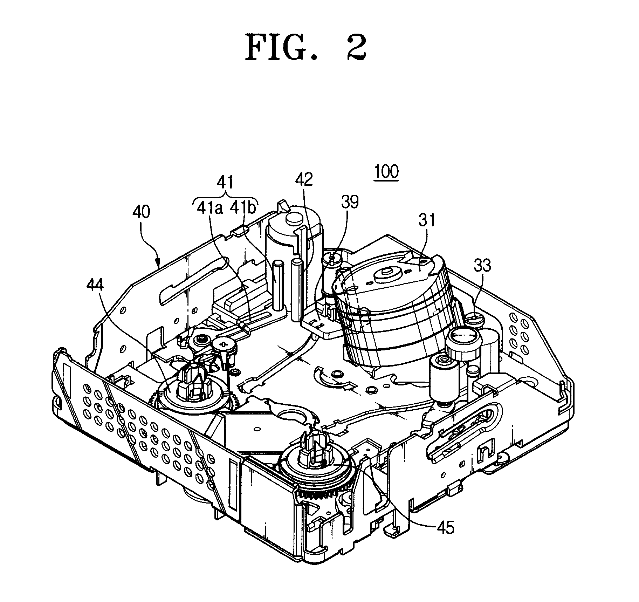

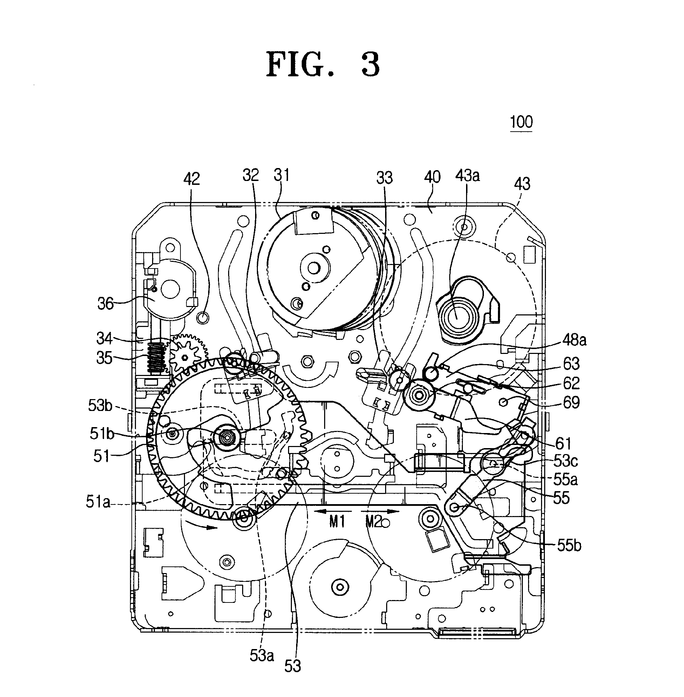

Referring to Figures 2, 3 and 4, a magnetic recording and reproducing apparatus 100 includes a deck 40 mounted with a rotary head drum 31, a cam gear 51, a main sliding member 53, a compressing lever 55, a pivot lever 61, a review arm 63, an elastic member 65, a pair of pole base assemblies 32, 33, a drum motor 36, a tension pole unit 41, a fixed pole 42 and a capstan motor 43.

The pole base assemblies 32, 33 are movably installed on the deck 40 and are for loading a length of magnetic tape to the head drum 31. The drum motor 36 drives the cam gear 51 through connecting gears 34, 35.

The tension pole unit 41 guides a loaded tape. The tension pole unit 41 includes a tension arm 41 a that is rotatably connected to the cam gear 51. A tension pole 41 b for guiding the tape is disposed at one end of the tension arm 41 a. The tension pole unit 41 may be controlled or moved to adjust the tension in the tape.

The capstan motor 43 includes a capstan shaft 43a for guiding the tape. The capstan motor 43 provides a driving force to reel tables 44, 45 whereupon two respective tape reels of the cassette tape may be seated. The left reel table 44 supplies the tape and the right reel table 45 takes-up the tape.

The cam gear 51 rotates by means of a connecting gears 34, 35. The cam gear 51 includes a cam groove 51a into which a cam pin 53a of the main sliding member 53 is inserted. The cam pin 53a of the main sliding member 53 engages with the cam groove 51a. Thus, the main sliding member 53 selectively slides in the M1 or M2 direction. The main sliding member 53 includes a guide slit 53b coupled to the rotation axis 51b of the cam gear 51.

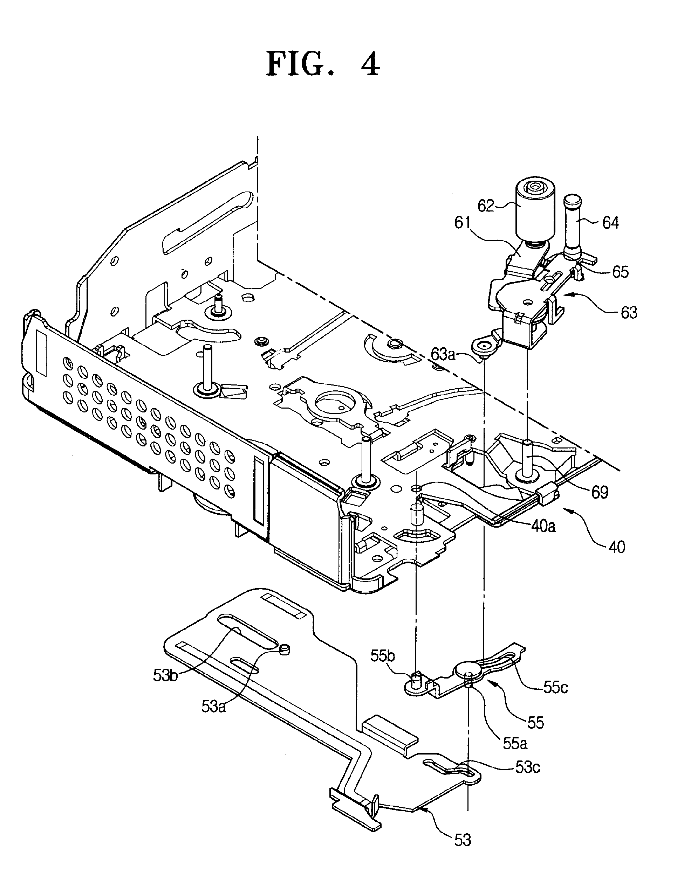

As shown in Figure 4, the main sliding member 53 also includes a first cam opening 53c into which a coupling pin 55a of the compressing lever 55 is inserted.

A pivot pin 55b is located at one end of the compressing lever 55 and a second cam opening 55c is located at the other end of the compressing lever 55. The pivot pin 55b is inserted into an opening 40a in the deck 40. The compressing pin 63a of the review arm 63 is inserted into the second cam opening 55c.

When the main sliding member 53 slides in the M2 direction, the coupling projection 55a moves along the first cam opening 53c and the compressing lever 55 moves in the counterclockwise direction with respect to the pivot pin 55b. The compressing pin 63a of the review arm 63 engages with the second cam opening 55c. Thus, the review arm 63 rotates in the clockwise direction.

The review arm 63 is rotatably installed on the deck 40. A review pole 64, disposed on a free end portion of the review arm 63, provides a fixed tension to the tape.

The pivot lever 61 is coaxially installed with the review arm 63. Thus, the pivot lever 61 is also rotatably coupled with the rotation axis 69 of the deck 40. A pinch roller 62 is rotatably installed on the pivot lever 61 and presses the loaded tape onto the capstan shaft 43a.

Preferably, the pivot lever 61 is rotatably installed on the deck 40 at a distance apart from a lower portion of the review arm 63, with respect to the rotation axis 69, to avoid contact with the review arm 63. The pivot lever 61 and the review arm 63 are connected to each other by means of an elastic member 65.

When the elastic member 65 is stretched, the pivot lever 61 moves in the clockwise direction and the pinch roller 62 is pressed onto the capstan shaft 43a. The elastic member 65 is preferably comprised of a spring element, or an elastic or rubber material.

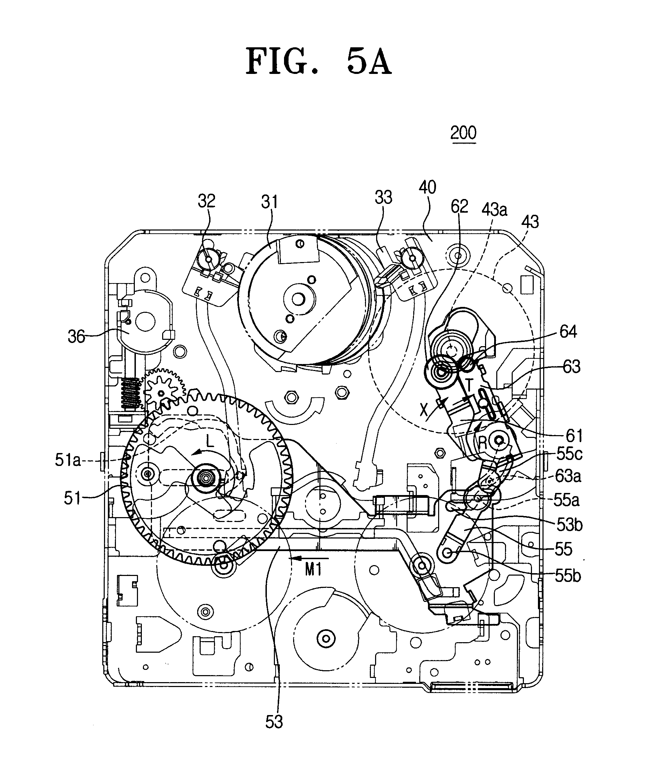

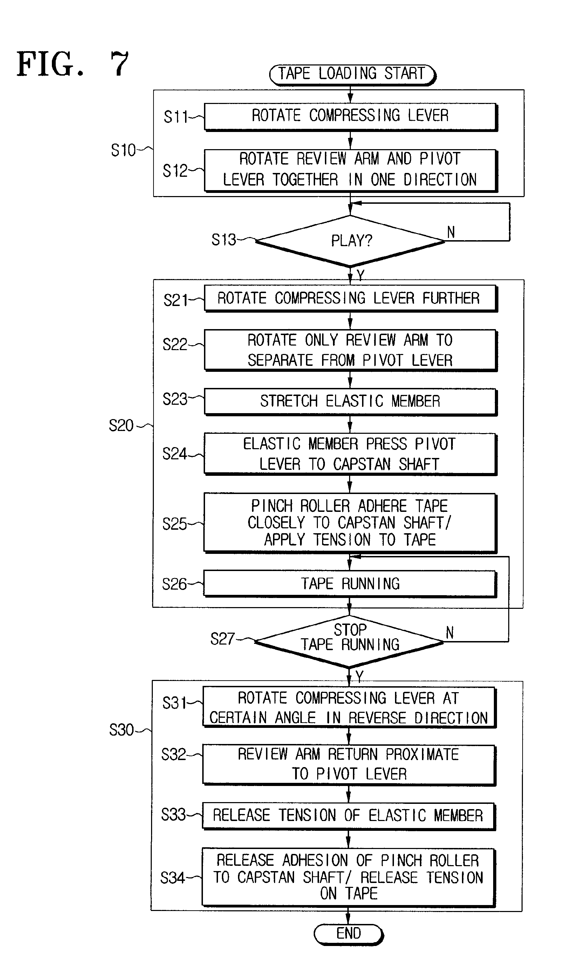

A method of driving the magnetic recording and reproducing apparatus 200 having the above structures will now be described in greater detail with reference to Figures 5A to 7.

When a cassette tape is seated upon the deck 40, a loading mode, driven by the drum motor 36, is executed (step S10). In the loading mode, the cam gear 51 rotates in the counterclockwise direction. Consequently, the main sliding member 53 moves in the M1 direction. As the main sliding member 53 moves in the M1 direction, the coupling pin 55a of the compressing lever 55 moves along the first cam opening 53b of the main sliding member 53 and the compressing lever 55 rotates to a particular angle in the counterclockwise direction (step S11).

As the compressing lever 55 rotates in the counterclockwise direction, the compressing pin 63a slides along the opening 55c and the review arm 63 rotates in the clockwise direction. Since the pivot lever 61 is held near to the review arm 63 by means of the elastic member 65, the pivot lever 61 and the review arm 63 rotate together and pull the tape towards the capstan shaft. Thus, the review arm 63 and the pivot lever 61 rotate together in the clockwise direction (step S12). At this time, the tape 70 is not yet pressed onto the capstan shaft 43a by means of the pinch roller 62. Since the review pole 64 is positioned proximate to the pinch roller 62, tension from the review pole 64 is not yet applied to the tape 70 and so the tape is released.

After being pulled out of the cassette tape, the loaded tape remains in stand-by mode until a play signal is input (step S13).

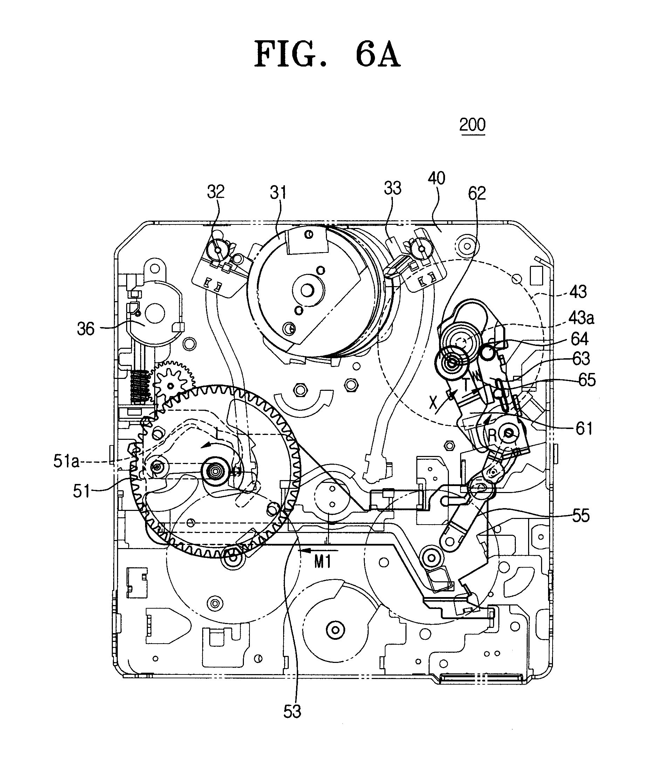

To execute the play mode (step S20), the main sliding member 53 slides as far as possible in the M1 direction, thereby rotating the compressing lever 55 further in the counterclockwise direction (step S21). As shown in Figure 6A, the compressing lever 55 is rotated to the farthest counterclockwise direction.

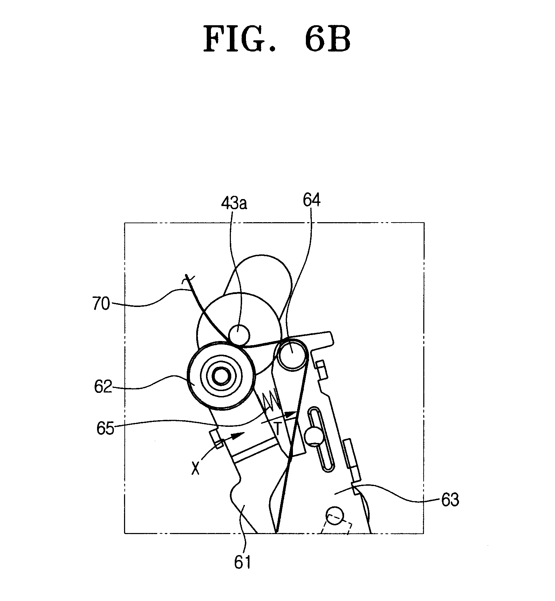

The review arm 63 shown in Figure 6A has been rotated further in the clockwise direction than the review arm 63 shown in Figure 5A. Consequently, the review arm 63 is spaced apart from the pivot lever 61 (step S22). The elastic member 65 is stretched in the T direction (step S23). The pivot lever 61 moves in the X direction, towards the capstan shaft 43a, as a result of the tension in the elastic member 65 (step S24). Therefore, referring to Figure 6B, the pinch roller 62 presses the tape 70 onto the capstan shaft 43a. The review pole 64 is spaced from the pinch roller 62 and provides tension to the tape (step S25).

In practice, the above-described steps (S21), (S22), (S23), (S24), and (S25) occur almost simultaneously.

When the tape is pressed onto the capstan shaft 43a, the tape starts running (step S26). During this step, information can be recorded or reproduced to or from the tape. The amount of force applied to the tape can be controlled by the tension pole unit 41.

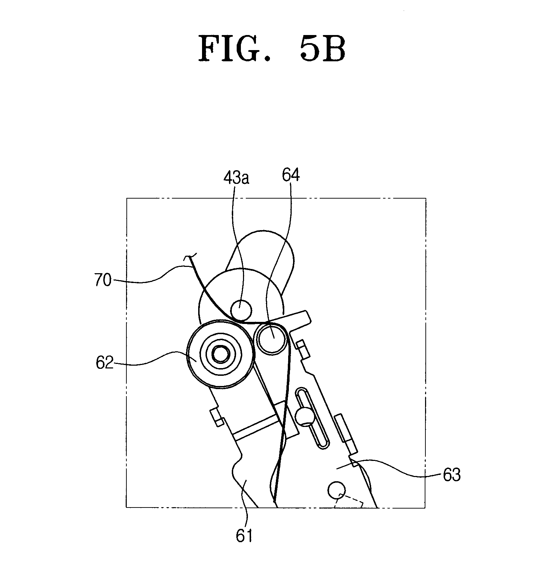

In the stop mode (step S27), the main sliding member 53 is returned in the M2 direction by a given distance. The compressing lever 55 rotates in the clockwise direction (step S31). The review arm 63 returns to a position proximate to the pivot lever 61, as shown in Figures 5A and 5B (step S32). Therefore, the stretched elastic member 65 is compressed and the tension in the tape is released (step S33). As a result, the tension provided by the review pole 64 is released (step S34). In this way, it becomes possible to prevent the tape from remaining in the tensed state during the stop mode and, thus, to prevent damage to the tape in the stop mode.

As described above, the exemplary embodiment of the magnetic recording and reproducing apparatus 200 of the present invention has a simplified structure in which the review arm 63 is used to press the pinch roller 62 onto the capstan shaft 43a.

The rotating motion of the review arm 63 can be controlled by means of the movement of the main sliding member 53. Thus, it is possible to adjust the tension in the tape in the stop mode. Therefore, the magnetic recording and reproducing apparatus according to an embodiment of the present invention no longer requires numerous additional parts, such as requiring the cam gear to control the tension pole unit. The number of required components is decreased and, thus, the cost of manufacturing the magnetic recording and reproducing apparatus can be reduced.

A magnetic recording and reproducing apparatus according to an embodiment of the present invention includes only one deck and does not have a sub-deck, as in conventional devices. Furthermore, since the pivot lever and the review arm are installed coaxially, the driving force of the main sliding member can be used to control both. With this simplified structure, a number of components can be omitted, resulting in a significant decrease in the total weight and manufacturing cost of the apparatus.

Moreover, according to an embodiment of the present invention, the pinch roller can be pressed onto the capstan shaft by controlling the main sliding member and hence the review arm.

Also, by controlling the rotation of the review arm, it becomes possible to release the tension on the tape in the stop mode.

## Claims

1. A cassette tape deck comprising
a pinch roller (62) movable between retracted and operative positions;
review pole (64) movable between retracted and operative positions; and
means for moving the pinch roller and the review pole between their retracted and operative positions.
**characterised in that**
the pinch roller (62) and the review pole (64) are resiliently coupled for movement together between their retracted positions and an intermediate position, whereat the pinch roller is at its operative position, and independent movement of the review pole beyond said intermediate position.

2. A deck according to claim 1, wherein the pinch roller is mounted distally on a first arm (61), the review pole is mounted distally on a second arm (63), the first and second arms are connected by a pivot at a proximal position and connected by spring means (65) at a distal position.

3. A deck according to claim 2, including a cam (51) and a lever (55), wherein one end of the lever comprises a cam follower, arranged to follow said cam and the other end of the lever is connected to the distal end of the second arm for moving the second arm so as to move the review pole between its retracted and operative position.

4. A magnetic recording and reproducing apparatus, comprising:
a deck mounted with a drum motor and a capstan shaft;
a main sliding member slidably installed on the deck and being driven by a driving force of the drum motor;
a pivot lever rotatably installed on the deck and supporting a pinch roller for guiding a tape to be in contact with the capstan shaft;
a review arm rotatably installed on the deck and being connected to the pivot lever by means of an elastic member; and
a compressing lever for connecting the review arm and the sliding member, wherein the compressing lever is driven by a driving force from the sliding member and compresses the review arm in a direction where the elastic member is stretched; and
wherein the pivot lever is rotated by the stretched elastic member and adheres the pinch roller closely to the capstan shaft.

5. The apparatus according to claim 4, wherein the pivot lever and the review arm have the same rotation axis.

6. The apparatus according to claim 5, wherein the compressing lever comprises a coupling projection, and the main sliding member comprises a first cam opening for slidably engaging the coupling projection, whereby during the motion of the main sliding member, the coupling projection slides along the first cam opening and rotates the compressing lever.

7. The apparatus according to claim 6, wherein the review arm comprises a compressing projection, and the compressing lever comprises a second cam opening for slidably engaging the compressing projection, whereby during the rotation of the compressing lever, the compressing projection slides along the second cam opening and rotates the review arm.

8. The apparatus according to claim 7, wherein the compressing lever further comprises a pivot pin that is rotatably inserted into one end of the deck, and wherein the coupling projection of the compressing lever is disposed between the pivot pin and the second cam opening.

9. The apparatus according to claim 4, wherein one end of the review arm is combined coaxially with the pivot lever, and a review pole is disposed at the other end of the review arm for guiding the tape.

10. A driving method of a magnetic recording and reproducing apparatus, the method comprising the steps of:
moving a pivot lever mounted with a pinch roller and loading a tape toward a capstan shaft; and
compressing the pivot lever to closely adhere the tape to the capstan shaft and thereby providing a tension to the tape.

11. The method according to claim 10, wherein the loading step comprises the sub-steps of:
rotating a compressing lever installed on a deck supporting the capstan shaft;
rotating a review arm connected to the compressing lever in one direction; and
rotating a pivot lever connected to the review arm by means of an elastic member.

12. The method according to claim 11, wherein the pivot lever rotates about the same rotation axis with respect to the review arm.

13. The method according to claim 11, wherein the rotations of the review arm and the pivot lever occur substantially simultaneously.

14. The method according to claim 11, wherein the compressing step comprises the sub-steps of:
applying tension to the tape by separating the review arm from the pivot lever and moving the review pole supported by the review arm; and
elastically compressing the pivot member to the capstan shaft by means of the elastic member that is stretched by the separation of the review arm from the pivot lever.

15. The method according to claim 14, wherein the tension applying step comprises the sub-steps of:
rotating the review arm more than the pivot lever to separate the pivot lever and the review arm.

16. The method according to claim 10, further comprising the step of:
releasing the tension on the tape by releasing the adherence force between the tape and the capstan shaft.

17. The method according to claim 16, wherein the tension releasing step is performed in a tape stop mode.

18. The method according to claim 16, wherein the tension releasing step comprises the sub-steps of:
returning the compressing lever to a designated angle of an original position thereof on the deck with respect to the capstan shaft;
returning the review arm, that is connected to the compressing lever and supporting the tape-supporting review pole, in a direction toward the pivot lever; and
releasing tension of the elastic member connecting the pivot lever and the review arm, thereby releasing a compressing force of the pinch roller to the capstan shaft.

19. A driving method of a magnetic recording and reproducing apparatus comprising a pinch roller driven by a driving force from a drum motor to rotate a pivot lever and closely adhere a loaded tape on a deck to a capstan shaft, the method comprising the steps of:
rotating a compressing lever;
rotating a review arm connected to the compressing lever in one direction;
rotating the pivot lever connected to the review arm by means of an elastic member; and
adhering the tape closely to the capstan shaft by means of the pinch roller installed upon the pivot lever.

20. The method according to claim 19, further comprising the steps of:
stretching the elastic member by means of the rotation of the review arm; and
pulling the pivot lever by means of the stretching of the elastic member to closely adhere the tape to the capstan shaft.
